# EUROPÄISCHE PATENTANMELDUNG

(11) **EP 1 217 848 A2**
(43) Veröffentlichungstag der Anmeldung: **26.06.2002**
(21) Anmeldenummer: 01000748.2
(22) Anmeldetag: 12.12.2001
(51) Int. Cl.: H04Q 7/22

(54) **Verfahren zur Meldung und Übertragung von verketteten Kurznachrichten**

(30) Priorität: 22.12.2000 DE 10064255; 09.07.2001 DE 10133257
(71) Anmelder: SIEMENS AKTIENGESELLSCHAFT, 80333 München (DE)
(72) Erfinder: Pusl, Stefan, 84405, Dorfen (DE)

(57) **Zusammenfassung**

Die Erfindung betrifft ein Verfahren zur Meldung und Übertragung von verketteten Kurznachrichten (SMS), vorzugsweise im GSM- oder UMTS-Mobilfunksystem, zwischen einem Service-Provider und einem Mobilfunkgerät.

Die Erfindung ist dadurch gekennzeichnet, daß vor dem Versenden von mindestens zwei verketteten Kurznachrichten zum Mobilfunkgerät die maximal mögliche Speicherkapazität im Mobilfunkgerät überprüft und erst nach der Feststellung eines ausreichenden Speicherplatzes die gesamte Kurznachricht versendet wird.

## Beschreibung

Die Erfindung betrifft ein Verfahren zur Meldung und Übertragung von verketteten Kurznachrichten (SMS), vorzugsweise im GSM- oder UMTS-Mobilfunksystem, zwischen einem Service-Provider und einem Mobilfunkgerät.

In dem allgemein bekannten Mobilfunksystem GSM und im Mobilfunksystem der nächsten Generation UMTS besteht die Möglichkeit zwischen den Nutzern dieser Systeme Kurznachrichten, sogenannte SMS (=Short message service) zu versenden. Solche Kurznachrichten (SMS) haben eine maximale Länge von 160 Zeichen pro Nachricht. Hierfür ist es notwendig, eine entsprechend große Speicherkapazität in dem empfangenden Mobilfunkgerät zur Verfügung zu stellen, damit diese Kurznachricht abgespeichert werden kann. Falls im empfangenden Mobilfunkgerät kein ausreichender freier Speicher zur Verfügung steht, weil beispielsweise zu viele Kurznachrichten bereits im Speicher hinterlegt sind, wird die empfangene Kurznachricht, die sich zu diesem Zeitpunkt nur im flüchtigen Arbeitsspeicher des Mobilfunkgerätes befindet, nicht angezeigt und eine Fehlermeldung an das jeweilige Funknetz geschickt. Wenn der Benutzer später wieder Speicherplatz zur Verfügung stellt, indem er beispielsweise eine oder mehrere Kurznachrichten, die sich in seinem Speicher befinden, löscht, so wird automatisch das Funknetz darüber informiert, daß das Mobilfunkgerät nun freien Speicher zum Empfangen von Kurznachrichten zur Verfügung stellt. Daraufhin werden vom Netz die bis dahin bevorrateten Kurznachrichten an das jeweilige Mobilfunkgerät ausgesendet. Die Information, welche Kurznachrichten-Zentralen anstehende Kurznachrichten besitzen, ist bekanntermaßen im HLR (=Home Location Register) des Mobilfunknetzes gespeichert.

Um weitere Zusatzdienste zu ermöglichen, reichen allerdings die maximal 160 Zeichen je Kurznachricht nicht aus. Aus diesem Grunde bieten sowohl der GSM- als auch der UMTS-Standard die Möglichkeiten, mehrere Kurznachrichten logisch zu verketten. Da der Speicher zum Abspeichern von Kurznachrichten in einem Mobilfunkgerät allerdings begrenzt ist, besteht hierbei das Problem, daß die Anzahl der verketteten Kurznachrichten größer sein kann, als die Anzahl der Kurnachrichten, die ein Mobilfunkgerät in seinem Kurznachrichtenspeicher, aufgrund des freien Speicherplatzes, abspeichern kann.

Dies führt dazu, daß das Mobilfunkgerät die verketteten Kurznachrichten solange empfängt bis der Kurznachrichtenspeicher voll ist, wobei allerdings das Mobilfunkgerät die empfangene, verkettete Kurznachricht nicht vollständig anzeigen und außerdem keine weiteren Kurznachrichten empfangen kann.

Es ist daher Aufgabe der Erfindung, ein Verfahren zur Meldung und Übertragung von verketteten Kurznachrichten anzugeben, welches es ermöglicht, neben einfachen einzelnen Kurznachrichten auch verkettete Kurznachrichten so zu versenden, daß diese immer vollständig auf dem Mobilfunkgerät angezeigt werden können.

Diese Aufgabe wird durch die Merkmale des Anspruches 1 gelöst. Vorteilhafte Weiterbildungen der Erfindung sind Gegenstand untergeordneter Ansprüche.

Demgemäß schlägt der Erfinder vor, das an sich bekannte Verfahren zur Meldung und Übertragung von verketteten Kurznachrichten, vorzugsweise im GSM- oder UMTS-Mobilfunksystem, zwischen einem Service-Provider und einem Mobilfunkgerät dahingehend zu verbessern, daß vor dem Versenden von mindestens zwei miteinander verketteten Kurznachrichten zum Mobilfunkgerät die maximal mögliche Speicherkapazität im Mobilfunkgerät überprüft und erst nach der Feststellung eines ausreichenden Speicherplatzes die gesamte Kurznachricht versendet wird.

Eine Weiterbildung des erfindungsgemäßen Verfahrens sieht vor, daß die Überprüfung der notwendigen freien Speicherplatzkapazität im Mobilfunknetz anhand des vom Mobilfunkgerät mitgeteilten freien Speicherplatzes stattfindet, wobei die Überprüfung der notwendigen freien Speicherplatzkapazität vorzugsweise im Mobilfunkgerät selbst stattfindet.

Es besteht aber auch die Möglichkeit, daß zur Überprüfung der notwendigen freien Speicherplatzkapazität im Mobilfunkgerät eine Information über die Gesamtzahl der verketteten Kurznachrichten in der ersten übertragenen oder zu übertragenden Kurznachricht verwendet wird, so daß anschließend im Mobilfunknetz, zum Beispiel im HLR (Home Location Register) oder im SC (Service Center), diese Überprüfung durchgeführt wird.

Des weiteren wird als eine vorteilhafte Ausbildung des Verfahrens vorgeschlagen, daß im Falle zu geringer Speicherkapazität vom Mobilfunkgerät eine Fehlermeldung an das Mobilfunknetz gesendet wird und im HLR des Netzes ein entsprechender Eintrag stattfindet.

Eine weitere Ausführungsform des Verfahrens sieht vor, daß im Falle ausreichender Speicherkapazität vom Mobilfunkgerät eine Meldung über den nun ausreichenden Speicherplatz an das Mobilfunknetz gesendet und die Sendung der verketteten Kurznachrichten durchgeführt wird.

Des weiteren kann vorgesehen werden, daß im Falle von später freiwerdender ausreichender Speicherkapazität vom Mobilfunkgerät eine Meldung über den ausreichenden Speicherplatz an das Mobilfunknetz gesendet wird und das HLR des Netzes nach noch nicht gesendeten verketteten Kurznachrichten durchsucht und diese entsprechend dem zur Verfügung stehenden Speicherplatz ans Mobilfunkgerät übertragen werden.

Erfindungsgemäß kann die Information über die Größe des freien Speicherplatzes, entsprechend dem an sich bekannten Protokollverlauf bei der Verbindung zwischen Mobilfunkgerät und Basisstation, auch in einem sogenannten Deliver-Report mit einer RP-ACK-Nachricht übertragen werden. Das ist die Antwort, die das Mobilfunkgerät bei der Ankündigung einer SMS an den Sender schickt. Vorzugsweise wird sie in den darin enthaltenen Nutzerdaten (TP-UD) oder dem Nutzerdaten-Header (TP-UDH) übertragen.

Eine beispielhafte konkrete Ausführungsform des erfindungsgemäßen Verfahrens kann wie folgt beschrieben werden:

Nach dem Einschalten des Mobilfunkgerätes setzt dieses eine interne variable AK auf einen Wert, der größer als die insgesamt vorhandenen freien Speicherplätze für Kurznachrichten ist.

Beim Empfang einer Kurznachricht überprüft das Mobilfunkgerät ob diese erste Kurznachricht ein Teil einer verketteten Kurznachricht ist. Falls ja, nimmt das Mobilfunkgerät der Kurznachricht die Information, aus wieviel verketteten Kurznachrichten die gesamte Kurznachricht besteht. Ist genügend Speicher vorhanden, dann wird die verkettete Kurznachricht empfangen und abgespeichert. Ist nicht genügend Speicher vorhanden, dann schickt das Mobilfunkgerät eine Fehlermeldung an das Netz mit dem Fehlergrund "verkettete Kurznachricht übersteigt den vorhandenen Kurznachrichten-Speicher". Ist die Anzahl der verketteten Kurznachrichten kleiner als AK, dann wird AK mit der kleineren Anzahl der verketteten Kurznachrichten überschrieben. Sobald im Mobilfunkgerät mindestens AK-Speicherplätze frei sind, schickt das Mobilfunkgerät eine Meldung an das Netz, das freier Speicher für verkettete Kurznachrichten vorhanden ist.

Im Netz wird nach dem Empfang einer Fehlermeldung mit dem Grund "verkettete Kurznachricht übersteigt den vorhandenen Kurznachrichten-Speicher" im HLR (=Home Location Register) ein Eintrag in einem Register mit dem Grund "Mobile-Station-Memory-Capacity-For-Concatenated-Short-Messages-Exceeded-Flag" erzeugt.

Dieser neue Eintrag enthält die Adresse SC des Service-Centers. Ist ein solcher Eintrag schon vorhanden, dann wird kein neuer Eintrag erzeugt. Schickt ein Mobilfunkgerät eine Meldung an das Netz, das freier Speicher für verkettete Kurznachrichten vorhanden ist, dann informiert das HLR die verschiedenen Service-Center, für die ein Eintrag mit dem Grund "Mobile-Station-Memory-Capacity-For-Concatenated-Short-Messages-Exceeded-Flag" vorhanden ist.

Auf diese Art und Weise wird also erreicht, daß einem Mobilfunkgerät erst dann verkettete Kurznachrichten gesendet werden, wenn dieses signalisiert, daß entsprechend genügender Speicherplatz zur Aufnahme der gesamten verketteten Kurznachricht vorhanden ist.

## Patentansprüche

1. Verfahren zur Meldung und Übertragung von verketteten Kurznachrichten (SMS), vorzugsweise im GSM- oder UMTS-Mobilfunksystem, zwischen einem Service-Provider und einem Mobilfunkgerät, **dadurch gekennzeichnet , daß** vor dem Versenden von mindestens zwei verketteten Kurznachrichten zum Mobilfunkgerät die maximal mögliche Speicherkapazität im Mobilfunkgerät überprüft und erst nach der Feststellung eines ausreichenden Speicherplatzes die gesamte Kurznachricht versendet wird.

2. Verfahren gemäß dem voranstehenden Anspruch 1, **dadurch gekennzeichnet, daß** die Überprüfung der notwendigen freien Speicherplatzkapazität im Mobilfunknetz anhand des vom Mobilfunkgerät mitgeteilten freien Speicherplatzes stattfindet.

3. Verfahren gemäß dem voranstehenden Anspruch 2, **dadurch gekennzeichnet, daß** die Überprüfung der notwendigen freien Speicherplatzkapazität im Service Center (SC) eines Providers stattfindet.

4. Verfahren gemäß dem voranstehenden Anspruch 2, **dadurch gekennzeichnet, daß** die Überprüfung der notwendigen freien Speicherplatzkapazität im Home Location Register (HLR) stattfindet.

5. Verfahren gemäß dem voranstehenden Anspruch 1, **dadurch gekennzeichnet, daß** die Überprüfung der notwendigen freien Speicherplatzkapazität im Mobilfunkgerät stattfindet.

6. Verfahren gemäß einem der voranstehenden Ansprüche 1 bis 5, **dadurch gekennzeichnet, daß** zur Überprüfung der notwendigen freien Speicherplatzkapazität im Mobilfunkgerät eine Information über die Gesamtzahl der verketteten Kurznachrichten in der ersten übertragenen oder zu übertragenden Kurznachricht verwendet wird.

7. Verfahren gemäß dem voranstehenden Anspruch 6, **dadurch gekennzeichnet, daß** im Falle zu geringer Speicherkapazität vom Mobilfunkgerät eine Fehlermeldung an das Mobilfunknetz gesendet wird und im HLR oder SC des Netzes ein Eintrag stattfindet.

8. Verfahren gemäß einem der voranstehenden Ansprüche 6 bis 7, **dadurch gekennzeichnet, daß** im Falle ausreichender Speicherkapazität vom Mobilfunkgerät eine Meldung über den ausreichenden Speicherplatz an das Mobilfunknetz gesendet und die Sendung der verketteten Kurznachrichten durchgeführt wird.

9. Verfahren gemäß einem der voranstehenden Ansprüche 6 bis 8, **dadurch gekennzeichnet, daß** im Falle von später freiwerdender ausreichender Speicherkapazität vom Mobilfunkgerät eine Meldung über den ausreichenden Speicherplatz an das Mobilfunknetz gesendet wird und das HLR oder das SC des Netzes nach noch nicht gesendeten verketteten Kurznachrichten durchsucht und diese entsprechend dem zur Verfügung stehenden Speicherplatz ans Mobilfunkgerät übertragen werden.

10. Verfahren gemäß einem der voranstehenden Ansprüche 1 bis 9, **dadurch gekennzeichnet, daß** die Information über die Größe des freien Speicherplatzes in einem Deliver-Report einer RP-ACK - Antwort, vorzugsweise in den darin enthaltenen Nutzerdaten (TP-UD) oder dem Nutzerdaten-Header (TP-UDH) übertragen wird.
